# EUROPEAN PATENT APPLICATION

(11) **EP 2 860 941 A1**
(43) Date of publication of application: **15.04.2015**
(21) Application number: 13800109.4
(22) Date of filing: 11.07.2013
(51) Int. Cl.: H04L 29/08

(54) **TERMINAL INFORMATION OBTAINING DEVICE AND METHOD IN HETEROGENEOUS TERMINAL ENVIRONMENT**

(30) Priority: 21.11.2012 CN 201210476740
(71) Applicant: ZTE Corporation, Shenzhen, Guangdong 518057 (CN)
(72) Inventor: SUN, Aifang, Shenzhen Guangdong 518057 (CN)
(74) Representative: Tischner, Oliver
(86) International application number: PCT/CN2013/079245
(87) International publication number: WO 2013/182120

(57) **Abstract**

Disclosed are a method and device for acquiring terminal information in a heterogeneous terminal environment, and the method includes: terminal information uploaded by one or more heterogeneous terminals is stored, feature information is extracted from the stored terminal information, the extracted feature information is described in a unified language or unified grammars, the feature information described in the unified language or unified grammars is classified, and the classified feature information is stored; or firstly the stored terminal information is described in a unified language or unified grammars, then the feature information is extracted from terminal information described in the unified language or unified grammars. The present disclosure can implement effective acquisition of terminal information in a multi-heterogeneous-terminal environment.

## Description

### TECHNICAL FIELD

The present disclosure relates to the field of acquiring terminal information, and in particular to a method and device for acquiring terminal information in a heterogeneous terminal environment.

### BACKGROUD

The mergence of multiple heterogeneous networks has been one of currently important technical directions studied in various technical fields, and the Next Generation Broadcasting (NGB), Internet of vehicles, Internet of things and ubiquitous networks are typical network frameworks of the mergence of multiple heterogeneous networks. In a framework of multiple merged heterogeneous networks, there will be multiple heterogeneous network terminals being different from each other both in shapes and functions. If terminal equipments of a network can be managed integratedly, various terminals near a user can be utilized sufficiently so that they can collaborate and provide the user with services synergistically. In addition, an integrated management of heterogeneous equipments is supported so as to implement a local maintenance and remote management of the equipments and a network consisting of them, and a user remote self-service management and upgrade service are supported, moreover a context service engine is provided with terminal information and capability description information. Through an integrated management platform, manufacturers of terminal equipments can release updated equipment software packages and configuration parameters with management content including abstraction of equipment capabilities and location of equipment resources, and implement related functions such as equipment registration and authentication.

With respect to above demands, "how to acquire terminal information in a multi-heterogeneous-terminal environment" has been one of problems necessary to be solved as the development of various merged heterogeneous networks and popularization and implementation of typical application scenarios. Hitherto a Chinese patent application publication CN102056140A, entitled "METHOD AND SYSTEM FOR OBTAINING INFORMATION OF MACHINE TYPE COMMUNICATION TERMINAL", discloses a solution which implements collection of terminal information in a mobility management network element by using a network framework consisting of a Machine-Type Communication (MTC) gateway and the mobility management network element. This method only applies to a network having a gateway and is limited to being used in a same network. In currently-studied Internet of things and ubiquitous networks, the range of terminal information is further extended, and terminals of which information is to be acquired are very heterogeneous, for example including mobile phones, portable computers and tablet computers, let alone different smart phones with different operation systems. There are two problems: terminal information desired to be acquired is heterogeneous and approaches for describing terminal information are heterogeneous. In addition, it is not necessarily to store all terminal information so as to avoid too much space occupying, difficulty for a user to retrieve or longer operation time consumed that may be caused when doing the opposite.

To sum up, in such a synergistic framework of multiple heterogeneous networks, how to acquire effectively terminal information in a multi-heterogeneous-terminal environment becomes a problem desired to be solved.

### SUMMARY

In view of the above, embodiments of the present disclosure are intended to provide a method and device for acquiring terminal information in a heterogeneous terminal environment.

To this end, the technical solutions of embodiments of the present disclosure are implemented as follows.

Embodiments of the present disclosure provide a device for acquiring terminal information in a heterogeneous terminal environment, and the device includes a storage unit, a feature extraction unit, a unified interface unit and a classification unit, wherein
the storage unit is configured to store terminal information uploaded by one or more heterogeneous terminals;
the feature exaction unit is configured to extract feature information from the stored terminal information;
the unified interface unit is configured to describe the extracted feature information in a unified language or unified grammars;
the classification unit is configured to classify feature information described in the unified language or unified grammars; and
the storage unit is further configured to store the classified feature information.

The terminal information may include at least one of: terminal information of a communication network terminal, terminal information of an Internet of Things (IoT) access gateway, terminal information of an IoT end node and terminal information of an IoT terminal.

The feature information may include user-customized terminal information and/or terminal capability information with coupling of the terminal information.

The unified language or unified grammars may be a HTM or URL.

The storage unit may be further configured to store the classified feature information in accordance with a format of information engine plus information content.
the information engine may include a class of the classified feature information; and the information content may be content of the feature information.

Embodiments of the present disclosure further provide a device for acquiring terminal information in a heterogeneous terminal environment, and the device includes a storage unit, a feature extraction unit, a unified interface unit and a classification unit, wherein
the storage unit is configured to store terminal information uploaded by one or more heterogeneous terminals;
the unified interface unit is configured to describe the stored terminal information in a unified language or unified grammars;
the feature extraction unit is configured to extract feature information from terminal information described in the unified language or unified grammars;
the classification unit is configured to classify the extracted feature information;
the storage unit is further configured to store the classified feature information.

The terminal information may include at least one of: terminal information of a communication network terminal, terminal information of an Internet of Things (IoT) access gateway, terminal information of an IoT end node and terminal information of an IoT terminal.

The feature information may include user-customized terminal information and/or terminal capability information with coupling of the terminal information.

The unified language or unified grammars may be a HTM or URL.

The storage unit may be further configured to store the classified feature information in accordance with a format of information engine plus information content,
the information engine comprises a class of the classified feature information; and the information content is content of the feature information.

Embodiments of the present disclosure further provide a method for acquiring terminal information in a heterogeneous terminal environment, and the method includes:
terminal information uploaded by one or more heterogeneous terminals is stored;
feature information is extracted from the stored terminal information;
the extracted feature information is described in a unified language or unified grammars;
feature information described in the unified language or unified grammars is classified; and
the classified feature information is stored.

The terminal information may include at least one of: terminal information of a communication network terminal, terminal information of an Internet of Things (IoT) access gateway, terminal information of an IoT end node and terminal information of an IoT terminal.

The feature information may include user-customized terminal information and/or terminal capability information with coupling of the terminal information.

The unified language or unified grammars may be a HTM or URL.

The classified feature information is stored may include: the classified feature information is stored in accordance with a format of information engine plus information content; the information engine may include a class of the classified feature information; and the information content may be content of the feature information.

Embodiments of the present disclosure further provide a method for acquiring terminal information in a heterogeneous terminal environment, and the method includes:
terminal information uploaded by one or more heterogeneous terminals is stored;
the stored terminal information is described in a unified language or unified grammars;
feature information is extracted from terminal information described in the unified language or unified grammars;
the extracted feature information is classified; and
the classified feature information is stored.

The terminal information may include at least one of: terminal information of a communication network terminal, terminal information of an Internet of Things (IoT) access gateway, terminal information of an IoT end node and terminal information of an IoT terminal.

The feature information may include user-customized terminal information and/or terminal capability information with coupling of the terminal information.

The unified language or unified grammars may be a HTM or URL.

The classified feature information is stored may include: the classified feature information is stored in accordance with a format of information engine plus information content;
the information engine may include a class of the classified feature information; and the information content may be content of the feature information.

In the method and device for acquiring terminal information in a heterogeneous terminal environment provided by embodiments of the present disclosure, terminal information uploaded by one or more heterogeneous terminals is stored, feature information is extracted from the stored terminal information, the extracted feature information is described in a unified language or unified grammars, feature information described in the unified language or unified grammars is classified, and the classified feature information is stored; or firstly the stored terminal information is described in a unified language or unified grammars, then feature information is extracted from terminal information described in the unified language or unified grammars. In this way, describing terminal information in a unified language or unified grammars may eliminate the heterogeneity of a way in which the terminal information is described; the extraction of feature terminal and the storage of the classified feature information solve problems of too much space occupied by the terminal information and difficulty for a user to retrieve, thus implementing effective acquisition of terminal information.

### BRIEF DESCRIPTION OF THE DRAWINGS

Fig. 1 is a schematic structural diagram of a device for acquiring terminal information provided by embodiment 1 of the present disclosure;
Fig. 2 is a schematic structural diagram of a device for acquiring terminal information provided by embodiment 2 of the present disclosure;
Fig. 3 is schematic diagram of a framework of various merged heterogeneous networks;
Fig. 4 is a schematic flow chart of acquiring terminal information in a heterogeneous environment provided by embodiment 3 of the present disclosure;
Fig. 5 is a schematic flow chart of acquiring terminal information in a heterogeneous environment provided by embodiment 4 of the present disclosure;
Fig. 6 shows a typical terminal synergism process;
Fig. 7 is a schematic flow chart of acquiring terminal information of a communication terminal in a heterogeneous environment provided by an embodiment of the present disclosure; and
Fig. 8 is a schematic flow chart of acquiring terminal information of an Internet of Things (IoT) end node, an IoT access gateway and an IoT terminal in a heterogeneous environment provided by an embodiment of the present disclosure.

### DETAILED DESCRIPTION

Technical solutions of the present disclosure will be further elaborated below in combination with accompanying drawings and specific embodiments.

In order to manage integratedly terminals in a heterogeneous terminal environment in a framework of multiple heterogeneous networks so that a user is provided with dynamically adaptive terminal cooperation and services, embodiments of the present disclosure provide a method and device for acquiring terminal information in a heterogeneous terminal environment. In order to make objectives, technical solutions and advantages of embodiments of the present disclosure more clear, the present disclosure will be further elaborated below with reference to the accompanying drawings and preferred embodiments.

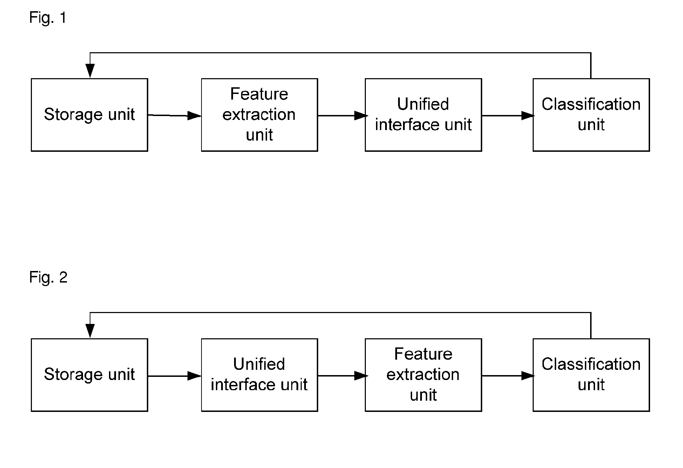

Fig. 1 is a schematic structural diagram of a device for acquiring terminal information provided by embodiment 1 of the present disclosure, and the device includes a storage unit, a unified interface unit, a feature extraction unit and a classification unit, wherein
the storage unit is configured to store terminal information uploaded by one or more heterogeneous terminals, and the terminal information includes terminal information of a communication network terminal, an IoT access gateway, an IoT end point and/or an IoT terminal.

The feature extraction unit is configured to extract feature information from the stored terminal information, and the feature information includes user-customized terminal information and/or terminal capability information with coupling of the terminal information; preferably, coupling factors between a terminal and a network are taken into account when the feature information is extracted.

The unified interface unit is configured to describe the extracted feature information in a unified language or unified grammars, wherein the unified language or unified grammars include but are not limited to a Hypertext Markup Language (HTML) or Uniform Resource Locator (URL).

The classification unit is configured to classify feature information described in the unified language or unified grammars.

The storage unit is further configured to store the classified feature information. Specifically, the classified feature information is stored in accordance with a format of information engine plus information content; the information engine includes a class of the classified feature information; and the information content is content of the feature information.

Fig. 2 is a schematic structural diagram of a device for acquiring terminal information provided by embodiment 2 of the present disclosure, and the device includes a storage unit, a unified interface unit, a feature extraction unit and a classification unit, wherein
the storage unit is configured to store terminal information uploaded by one or more heterogeneous terminals, and the terminal information includes terminal information of a communication network terminal, an IoT access gateway, an IoT end point and/or an IoT terminal.

The unified interface unit is configured to describe the stored terminal information in a unified language or unified grammars, and the unified language or unified grammars include but are not limited to a HTML or URL.

The feature extraction unit is configured to extract feature information from terminal information described in the unified language or unified grammars, and the feature information includes user-customized terminal information and/or terminal capability information with coupling of the terminal information; preferably, coupling factors between a terminal and a network are taken into account when the feature information is extracted.

The classification unit is configured to classify the extracted feature information;

The storage unit is further configured to store the classified feature information. Specifically, the classified feature information is stored in accordance with a format of information engine plus information content; the information engine includes a class of the classified feature information; and the information content is content of the feature information.

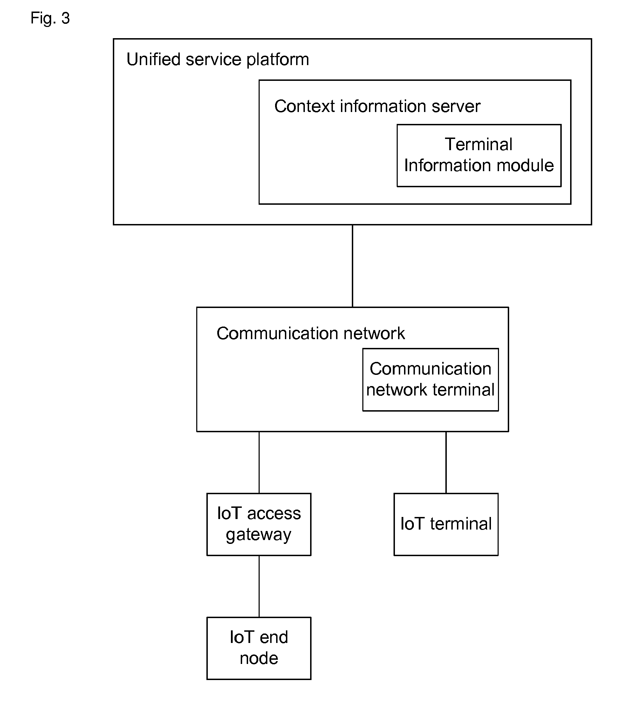

A system framework to which the device shown in above Fig. 1 or Fig. 2 is applied is as shown in Fig. 3, wherein
a unified service platform is a platform, between a network layer and an application layer, for providing unified services in a framework of multiple heterogeneous merged networks, and the platform includes but is not limited to a context information server for providing context information, a data sharing server for providing shared data and a wireless resource management server; specifically, the context server mainly includes a terminal information module. Preferably, the device shown in Fig. 1 or Fig. 2 is applied to the terminal information module.

The terminal information module is in charge of acquiring and storing terminal information of one or more heterogeneous terminals. The specific implementation of the terminal information module is described in the description of Fig. 1 and Fig. 2 and thus is not described again for simplicity.

One or more heterogeneous terminals according to embodiments of the present disclosure include a communication network terminal, an IoT access gateway, an IoT end node and an IoT terminal.

The communication network includes but is not limited to 2G mobile communications, 3G mobile communications and next generation wireless networks, x Digital Subscriber Line (xDSL), Fiber-to-The-X (FTTx), satellite/microwave, Ethernet, Wireless Fidelity (WiFi) and the like. Further, above communication network terminals are located in communication networks. The communication network terminal is in charge of acquiring information of a communication network, including network description information (such as network identity, location. access type, coverage and IP address), general information of the network (such as bandwidth, service supported, available media port, available QoS, security level) and stream information; and also in charge of uploading acquired information of the communication network to the terminal information module.

The IoT access gateway is in charge of connecting a sensor network and a communication network, and the IoT access gateway is heterogeneous.

The IoT end node is a sensor of a perception extended layer or an equipment having various perception capabilities, connected with the communication network through the IoT access gateway.

The IoT terminal refers to an equipment enabling connection of an information acquisition functional module with the communication network terminal and interacting directly with the communication network.

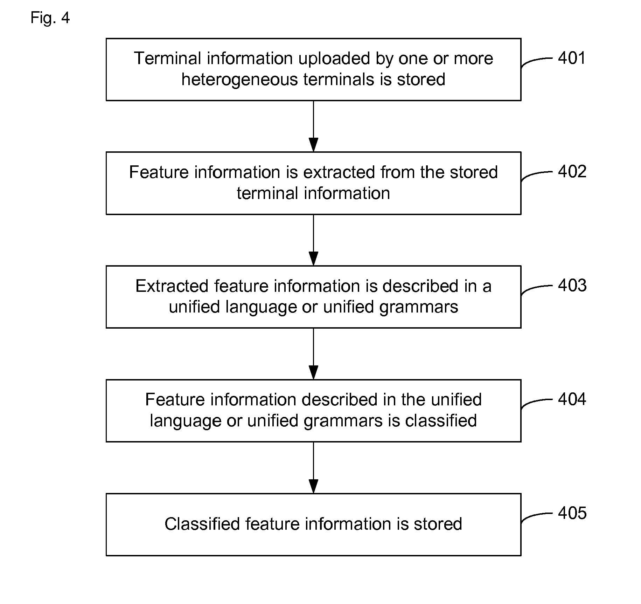

Fig. 4 is a schematic flow chart of acquiring terminal information in a heterogeneous environment provided by embodiment 3 of the present disclosure, including:
Step 401, terminal information uploaded by one or more heterogeneous terminals is stored;
Step 402, feature information is extracted from the stored terminal information;
Step 403, the extracted feature information is described in a unified language or unified grammars;
Step 404, feature information described in the unified language or unified grammars is classified; and
Step 405, the classified feature information is stored.

Specifically, the terminal information includes at least one of: terminal information of a communication network terminal, terminal information of an Internet of Things (IoT) access gateway, terminal information of an IoT end node and terminal information of an IoT terminal.

The feature information includes user-customized terminal information and/or terminal capability information with coupling of the terminal information.

The unified language or unified grammars may be a HTM or URL.

The classified feature information is stored may include: the classified feature information is stored in accordance with a format of information engine plus information content; the information engine may include a class of the classified feature information; and the information content may be content of the feature information.

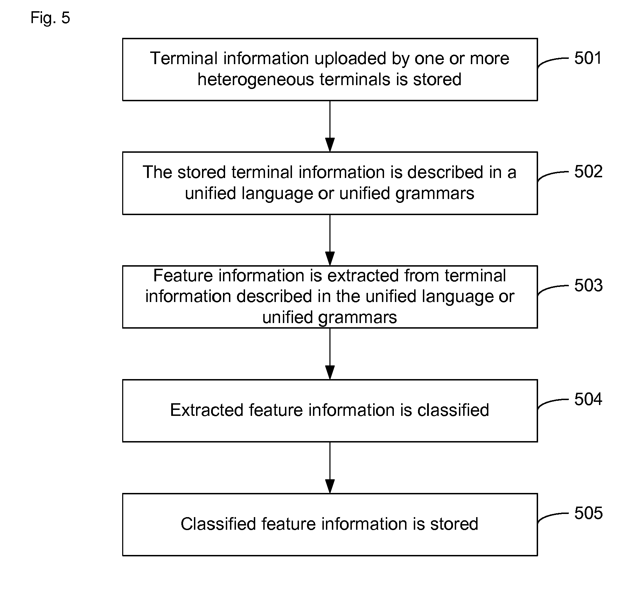

Fig. 5 is a schematic flow chart of acquiring terminal information in a heterogeneous environment provided by embodiment 4 of the present disclosure, including:
Step 501, terminal information uploaded by one or more heterogeneous terminals is stored;
Step 502, the stored terminal information is described in a unified language or unified grammars;
Step 503, feature information is extracted from terminal information described in the unified language or unified grammars;
Step 504, the extracted feature information is classified; and
Step 505, the classified feature information is stored.

Specifically, the terminal information includes at least one of: terminal information of a communication network terminal, terminal information of an Internet of Things (IoT) access gateway, terminal information of an IoT end node and terminal information of an IoT terminal.

The feature information includes user-customized terminal information and/or terminal capability information with coupling of the terminal information.

The unified language or unified grammars may be a HTM or URL.

The classified feature information is stored may include: the classified feature information is stored in accordance with a format of information engine plus information content; the information engine may include a class of the classified feature information; and the information content may be content of the feature information.

The implementation of technical solutions above according to embodiments of the present disclosure will be specifically described below.

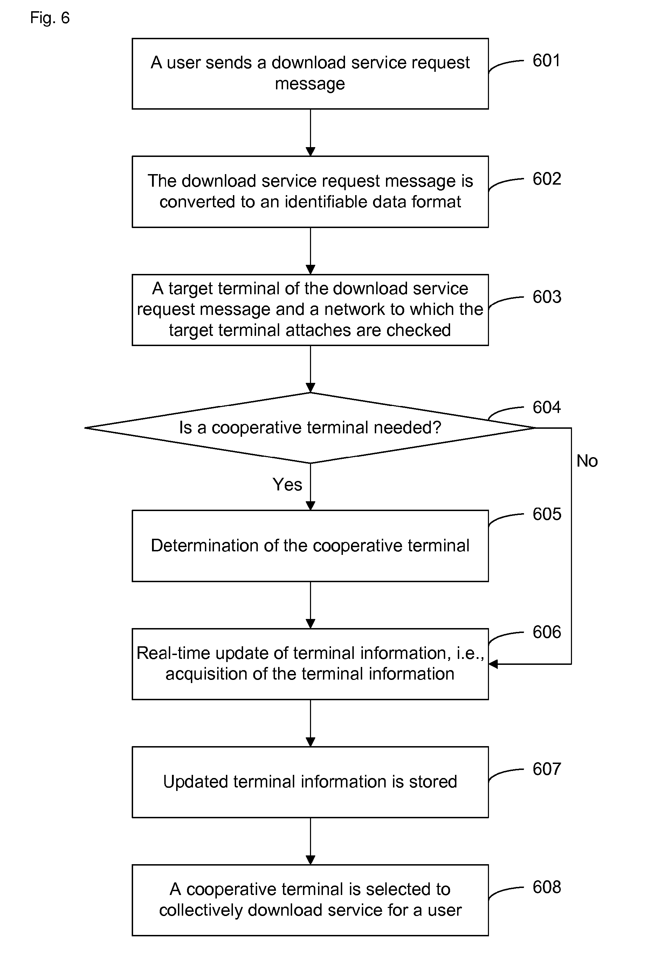

One major application scenario of acquiring information in a heterogeneous-terminal environment is a collaboration process of the terminal, Fig. 6 shows a typical terminal cooperation process, in which acquisition of terminal information can be implemented. Specific steps are as follows.

Step 601, a user sends a download service request message including type and content of a service desired to be downloaded.

Step 602, after a terminal information module receives the download service request message, the download service request message is converted into an identifiable data format through being parsed by a unified interface unit.

Step 603, the unified interface unit further triggers a storage unit in an event trigger way, and the storage unit searches throughout the stored information according to a received download service request message, checks a target terminal of the download service request message, i.e., a terminal capable of providing a requested service and checks a network to which the target terminal attaches. Here the target terminal may be one of a communication network terminal, an IoT access gateway, an IoT end node and an IoT terminal.

Step 604, the terminal information module determines whether a cooperative terminal is needed according to terminal information of the target terminal and information of the network to which the target terminal attaches, if Yes, proceed to step 605; if No, proceed to step 606.

Step 605, if the cooperative terminal is needed, the storage unit will further search throughout its stored information to check other functional servers in a unified service platform, and according to a priority of the capability of the target terminal and a priority of the network to which the target terminal attaches, trigger other functional servers in the unified service platform (including but not being limited to a wireless resource management server, a data sharing server and the like) in an event trigger to complete the determination of the cooperative terminal (which may be one or more of a communication network terminal, an IoT access gateway, an IoT end node and an IoT terminal); preferably, the priority of the terminal capability is sorted by the service type and content in the download service request message; the priority of the network is sorted by a load and QoS of the network.

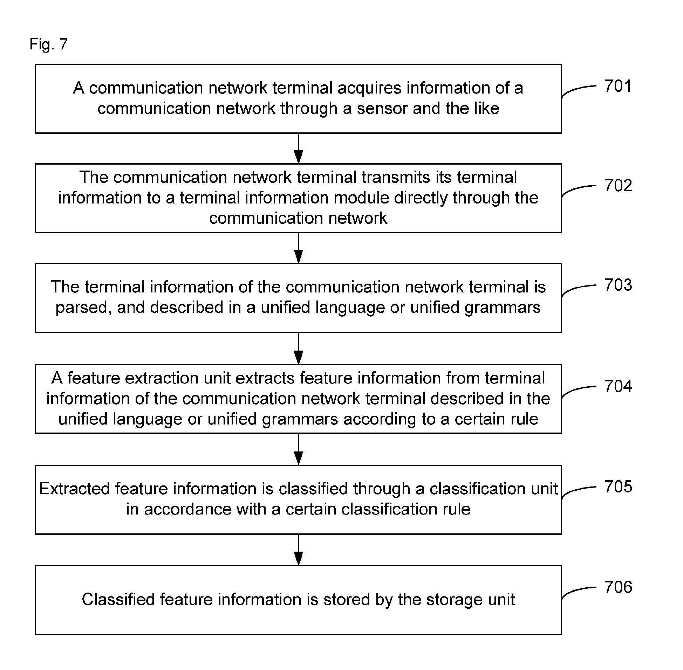

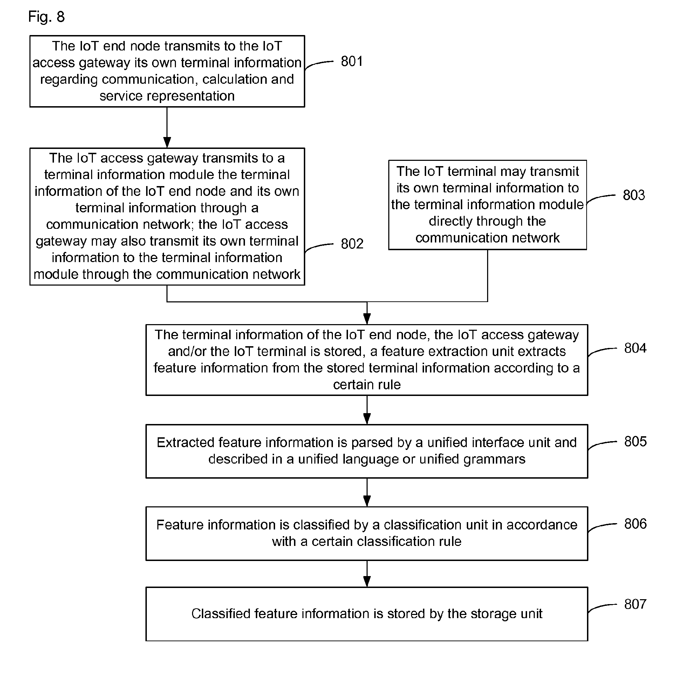

Step 606, if the cooperative terminal is not needed or after the cooperative terminal is determined, the terminal information in the terminal information module will be updated in real time, which is essentially the acquisition of the terminal information. The acquisition of terminal information will be described through subsequent Fig. 7 and Fig. 8.

Step 607, updated terminal information is stored into the storage unit to facilitate subsequent retrieval.

Step 608, the user knows conditions of a communication network according to terminal information of a communication network terminal in the network to which the target terminal attaches, and in combination with terminal information of other terminals (i.e., cooperative terminals determined in step 605), selects an appropriate cooperative terminal to collectively download services.

Fig. 7 is a schematic flow chart of acquiring terminal information of a communication terminal in a heterogeneous environment provided by an embodiment of the present disclosure, including:
701, a communication network terminal acquires, through an sensor and the like, information of a communication network including network description information, general information of the network and stream information; specifically, the network description information includes network identity, location. access type, coverage and IP address, and the general information of the network includes bandwidth, service supported, available media port, available QoS, security level; and the information of the communication network is namely terminal information of the communication network terminal.
702, the communication network terminal transmits its terminal information to a terminal information module directly through the communication network.
703, after being received by the terminal information module, the terminal information of the communication network terminal is stored by a storage unit, parsed by a unified interface unit and described in a unified language or unified grammars which include but are not limited to a HTML or URL.
704, a feature extraction unit extracts feature information from terminal information of the communication network terminal described in the unified language or unified grammars according to a certain rule established from main technical indexes of the network such as QoS, load rate and bandwidth; preferably, coupling factors between a terminal and a network are taken into account when the feature information is extracted. Here the feature information refers to user-customized terminal information and/or terminal capability information with coupling of the terminal information.
705, the extracted feature information is classified through a classification unit in accordance with a certain classification rule; for terminal information of the communication network terminal, the classification method includes classifying according to communication capability, processing capability and interaction capability of the terminal or classifying according to a structure type and level of the network; it should be noted that the classification method is not limited to what described herein.
706, the classified feature information is stored by the storage unit to facilitate a user to check and use when a cooperative terminal or network is selected. Preferably, the feature information is stored in a "information engine plus information content" format. The information engine includes a class of the classified feature information; and the information content is namely specific content of the feature information.

Fig. 8 is a schematic flow chart of acquiring terminal information of an Internet of Things (IoT) end node, an IoT access gateway and an IoT terminal in a heterogeneous environment provided by an embodiment of the present disclosure, including:
801, the IoT end node transmits to the IoT access gateway its own terminal information regarding communication, calculation and service representation.
802, the IoT access gateway receives the terminal information from the IoT end node, and converts the terminal information into a data format identifiable by the IoT access gateway itself. Then the IoT access gateway transmits to a terminal information module the terminal information of the IoT end node and its own terminal information through a communication network. The IoT access gateway may also transmit its own terminal information to the terminal information module through the communication network.
803, the IoT terminal may transmit its own terminal information to the terminal information module directly through the communication network.
804, after being received by the terminal information module, the terminal information of the IoT end node, the IoT access gateway and/or the IoT terminal is stored by a storage unit. A feature extraction unit extracts feature information from the stored terminal information according to a certain rule, and for the terminal information of the IoT end node, the IoT access gateway and/or the IoT terminal, the rule is established from context information such as preference of a user and a priority of the capability of a terminal; preferably, coupling factors between a terminal and a network are taken into account when the feature information is extracted. Here the feature information may include user-customized terminal information and/or terminal capability information with coupling of the terminal information.
805, the extracted feature information is parsed by a unified interface unit and described in a unified language or unified grammars which include but are not limited to a HTML or URL.
806, feature information is classified by a classification unit in accordance with a certain classification rule, for the terminal information of the IoT end node, the IoT access gateway and/or the IoT terminal, the classification method includes classifying according to the type of a terminal (such as mobile phone, gateway, laptop and the liek) and performance of a terminal (such as 3G product, LTE product and the like); it should be noted that the classification method is not limited to what described herein.
807, the classified feature information is stored by the storage unit to facilitate a user to check and use when a cooperative terminal or network is selected. Preferably, the feature information is stored in a "information engine plus information content" format. Here the information engine includes a class of the classified feature information; and the information content is namely specific content of the feature information.

Embodiments of the present disclosure provide a user with a method and device for acquiring in time terminal information in a multi-heterogeneous-terminal environment in a framework of multiple merged heterogeneous networks. The method and device can not only enable a user to check available terminals and networks in time but also perform unified management of terminals in a heterogeneous terminal environment, thus providing efficiently a user with services.

What described are merely preferable embodiments of the present disclosure, and are not intended to limit the present disclosure.

## Claims

1. A device for acquiring terminal information in a heterogeneous terminal environment, the device comprising a storage unit, a feature extraction unit, a unified interface unit and a classification unit, wherein
the storage unit is configured to store terminal information uploaded by one or more heterogeneous terminals;
the feature exaction unit is configured to extract feature information from the stored terminal information;
the unified interface unit is configured to describe the extracted feature information in a unified language or unified grammars;
the classification unit is configured to classify feature information described in the unified language or unified grammars; and
the storage unit is further configured to store the classified feature information.

2. The device according to claim 1, wherein the terminal information comprises at least one of: terminal information of a communication network terminal, terminal information of an Internet of Things (IoT) access gateway, terminal information of an IoT end node and terminal information of an IoT terminal.

3. The device according to claim 1, wherein the feature information comprises user-customized terminal information and/or terminal capability information with coupling of the terminal information.

4. The device according to claim 1, wherein the unified language or unified grammars are a Hypertext Markup Language (HTML) or Uniform Resource Locator (URL).

5. The device according to claim 1, wherein the storage unit is further configured to store the classified feature information in accordance with a format of information engine plus information content, the information engine comprises a class of the classified feature information, and the information content is content of the feature information.

6. A device for acquiring terminal information in a heterogeneous terminal environment, the device comprising a storage unit, a feature extraction unit, a unified interface unit and a classification unit, wherein
the storage unit is configured to store terminal information uploaded by one or more heterogeneous terminals;
the unified interface unit is configured to describe the stored terminal information in a unified language or unified grammars;
the feature extraction unit is configured to extract feature information from terminal information described in the unified language or unified grammars;
the classification unit is configured to classify the extracted feature information;
the storage unit is further configured to store the classified feature information.

7. The device according to claim 6, wherein the terminal information comprises at least one of: terminal information of a communication network terminal, terminal information of an Internet of Things (IoT) access gateway, terminal information of an IoT end node and terminal information of an IoT terminal.

8. The device according to claim 6, wherein the feature information comprises user-customized terminal information and/or terminal capability information with coupling of the terminal information.

9. The device according to claim 6, wherein the unified language or unified grammars are a Hypertext Markup Language (HTML) or Uniform Resource Locator (URL).

10. The device according to claim 6, wherein the storage unit is further configured to store the classified feature information in accordance with a format of information engine plus information content;
the information engine comprises a class of the classified feature information; and the information content is content of the feature information.

11. A method for acquiring terminal information in a heterogeneous terminal environment, the method comprising:
storing terminal information uploaded by one or more heterogeneous terminals;
extracting feature information from the stored terminal information;
describing the extracted feature information in a unified language or unified grammars;
classifying the feature information described in the unified language or unified grammars; and
storing the classified feature information.

12. The method according to claim 11, wherein the terminal information comprises at least one of: terminal information of a communication network terminal, terminal information of an Internet of Things (IoT) access gateway, terminal information of an IoT end node and terminal information of an IoT terminal.

13. The method according to claim 11, wherein the feature information comprises user-customized terminal information and/or terminal capability information with coupling of the terminal information.

14. The method according to claim 11, wherein the unified language or unified grammars are a Hypertext Markup Language (HTML) or Uniform Resource Locator (URL).

15. The method according to claim 11, wherein the storing classified feature information comprises storing the classified feature information in accordance with a format of information engine plus information content;
the information engine comprises a class of the classified feature information; and the information content is content of the feature information.

16. A method for acquiring terminal information in a heterogeneous terminal environment, the method comprising:
storing terminal information uploaded by one or more heterogeneous terminals;
describing the stored terminal information in a unified language or unified grammars;
extracting feature information from the terminal information described in the unified language or unified grammars;
classifying the extracted feature information; and
storing the classified feature information.

17. The method according to claim 16, wherein the terminal information comprises at least one of: terminal information of a communication network terminal, terminal information of an Internet of Things (IoT) access gateway, terminal information of an IoT end node and terminal information of an IoT terminal.

18. The method according to claim 16, wherein the feature information comprises user-customized terminal information and/or terminal capability information with coupling of the terminal information.

19. The method according to claim 16, wherein the unified language or unified grammars are a Hypertext Markup Language (HTML) or Uniform Resource Locator (URL).

20. The method according to claim 16, wherein the storing classified feature information comprises storing the classified feature information in accordance with a format of information engine plus information content;
the information engine comprises a class of the classified feature information; and the information content is content of the feature information.
